# EUROPEAN PATENT APPLICATION

(11) **EP 3 699 785 A1**
(43) Date of publication of application: **26.08.2020**
(21) Application number: 19305217.2
(22) Date of filing: 22.02.2019
(51) Int. Cl.: G06F 17/24

(54) **METHOD FOR MANAGING DATA OF DIGITAL DOCUMENTS**

(71) Applicant: Thales Dis France SA, 92190 Meudon (FR); Gemalto Canada Inc., Burlington, ON L7L-6A8 (CA)
(72) Inventor: ROMA, Frédéric, 13881 Gemenos Cedex (FR); HUGOT, Didier, 13881 Gemenos Cedex (FR)
(74) Representative: Grevin, Emmanuel

(57) **Abstract**

The invention is a method that comprises parsing first and second digital documents and identifying a first component into said first digital document and a second component into said second digital document, determining a first attribute based on a context of the first digital document, determining a second attribute based on a context of the second digital document, allocating the first attribute to the first component and the second attribute to the second component, and storing in a storage unit a first entry comprising a value of the first component and the first attribute and a second entry comprising a value of the second component and the second attribute. The method comprises conducting a correlation search between said first and second components using said first and second attributes, if the correlation has been found, generating a data reflecting the correlation.

## Description

### (Field of the invention)

The present invention relates to methods for handling data of one or several digital documents. It relates particularly to methods of managing data of a digital document so as to ease further treatments.

### (Background of the invention)

With data being spread everywhere, it becomes critical for enterprises to discover and protect sensitive data under their perimeter wherever they are stored (e.g. on servers, employee laptops, mobile phones, network shares, web applications.).

It is known to performed data discovery by scanning data stores under the control of the enterprise. Likewise, it is known to classify the information in order to determine what the critical data are. Such data classification may be based on machine learning, regular expressions or other mechanisms in order to detect sensitive information.

The problem which is not solved as of today is how to find correlations between different data which have been discovered in different documents, different locations and at different times. As an example, a phone number can be detected. Later on a social security number can be discovered, and then a postal address, an email address... This results in a lot of individual data (which may be sensitive) from anyone but without any correlation between them.

This leads to difficulties when we want to exploit this multitude of data coming from heterogeneous sources.

There is need to provide a solution that facilitates the management of data coming from heterogeneous sources.

### (Summary of the Invention)

The invention aims at solving the above mentioned technical problem.

An object of the present invention is a computer-implemented method for managing data. The method comprises parsing a first digital document and identifying a first component into said first digital document, determining a first attribute based on a context of the first digital document or on a context of the first component with respect to the first digital document, allocating the first attribute to the first component and storing a first entry comprising a value of the first component and the first attribute in a storage unit. The method comprises parsing a second digital document, identifying a second component in a second digital document, determining a second attribute based on a context of the second digital document or on a context of the second component with respect to the second digital document, allocating the second attribute to the second component and storing a second entry comprising a value of the second component and the second attribute in the storage unit. The method comprises conducting a correlation search between said first and second components using said first and second attributes and if the correlation has been found, generating a data reflecting the correlation.

Advantageously, the method may comprise parsing a third digital document, identifying both the first component and a third component into said third digital document, looking for a relation between said first and third components based on a context of said first and third components with respect to the third digital document and, if the relation has been found, allocating the first attribute to the third component and storing a third entry comprising a value of the third component and the first attribute in the storage unit.

Advantageously, the correlation may be the fact that said first and second components are linked to attributes with identical values.

Advantageously, each of said attributes may be a linked attribute or a fixed attribute.

Advantageously, the correlation search may be conducted by comparing the value of said first component with said second attributes.

Advantageously, the method may comprise parsing a fourth digital document, getting a new value of the first component from said fourth digital document, checking that the new value is equal to the value of the first component stored in said first entry, and in case of discrepancy, proposing to an administrator to update said first entry with the new value.

Advantageously, the method may comprise parsing a fourth digital document, getting a new value of the first component from said fourth digital document and, checking that the new value is equal to the value of the first component stored in said first entry, in case of discrepancy, automatically updating said first entry with the new value.

Advantageously, the method may comprise:
- allocating a first identifier including a first display value and a first link value to said first component, said first identifier being stored in said first entry, and
- generating a new version of the first digital document by replacing the value of said first component by the first identifier in the first digital document.

Advantageously, the first component is a sensitive data.

Another object of the present invention is a system for managing data. The system comprises a processor, a storage unit and a generator including a first set of instructions that, when executed by the processor, cause said generator to parse a first digital document, to identify a first component into said first digital document, to determine a first attribute based on a context of the first digital document or on a context of the first component with respect to the first digital document, to allocate the first attribute to the first component and to store a first entry comprising a value of the first component and the first attribute in a storage unit (60), to parse a second digital document, to identify a second component in said second digital document, to determine a second attribute based on a context of the second digital document or on a context of the second component with respect to the second digital document, to allocate the second attribute to the second component and to store a second entry comprising a value of the second component and the second attribute in a storage unit, to conduct a correlation search between said first and second components using said first and second attributes and if the correlation has been found, to generate a data reflecting the correlation.

Advantageously, the generator may include a second set of instructions that, when executed by the processor, cause said generator to parse a third digital document, to identify both the first component and a third component into said third digital document, to look for a relation between said first and third components based on a context of said first and third components with respect to the third digital document, if the relation has been found, to allocate the first attribute to the third component and to store a third entry comprising a value of the third component and the first attribute in the storage unit.

Advantageously, the generator may include a third set of instructions that, when executed by the processor, cause said generator to parse a fourth digital document, to get a new value of the first component from said fourth digital document and, to check that the new value is equal to the value of the first component stored in said first entry, in case of discrepancy, to propose to an administrator to update said first entry with the new value.

Advantageously, the generator may include a fourth set of instructions that, when executed by the processor, cause said generator to parse a fourth digital document, to get a new value of the first component from said fourth digital document and, to check that the new value is equal to the value of the first component stored in said first entry, in case of discrepancy, to automatically update said first entry with the new value.

Advantageously, the generator may include a fifth set of instructions that, when executed by the processor, cause said generator
- to allocate a first identifier including a first display value and a first link value to said first component, said first identifier being stored in said first entry, and
- to generate a new version of the first digital document by replacing the value of said first component by said first identifier in the first digital document.

Advantageously, the value of said first component may be reachable in the storage unit through said first link value, the storage unit may be configured to use access rules for authorizing or denying a request initiated by a user and aiming at accessing the value of said first component stored in said first entry.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts a flow chart for handling data of documents according to an example of the invention;
- Figure 2 depicts a flow chart for handling data of documents according to another example of the invention;
- Figure 3 depicts a flow chart for updating a digital document according to another example of the invention;
- Figure 4 is a storage unit populated with data coming from several digital documents according to a first example of the invention;
- Figure 5 is a first example of architecture of a system according to the invention;
- Figure 6 is a second example of architecture of a system according to the invention; and
- Figure 7 is a storage unit according to a second example the invention.

### (Detailed description of the preferred embodiments)

The invention may apply to any type of digital document comprising several types of data. It is well-suited for managing structured documents comprising sensitive data. In particular the invention allows to manage personally identifiable information (PII) and sensitive personal information (SPI). It applies to any digital document coming from any data sources like emails, file systems, databases, file servers or smartphone storage. For instance, a text file or a spreadsheet are kind of digital documents.

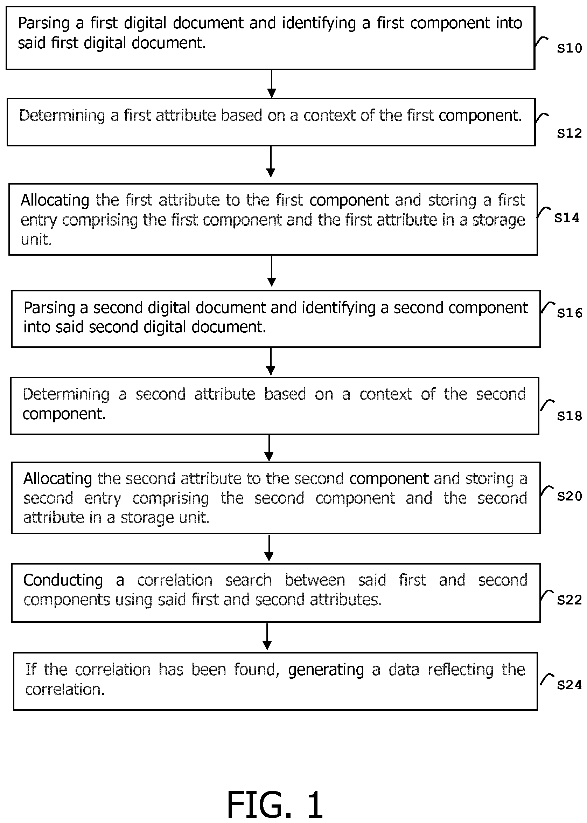

**Figure 1** shows a flow chart for handling data of documents according to a first example of the invention.

At step S10, a first digital document (for instance an email) is parsed to find component(s). Parsing could be an automated process or initiated by a manual action. A first component (for instance a passport number) is identified.

At step S12, if possible, a first attribute is determined based on the context of the found first component. In one embodiment, the first attribute is determined based on a context of the first digital document. For instance, if a sensitive information is detected in an email found in the 'sent items' folder of an email application installed on a computer, the attribute may be the name of the person to which the computer is allocated.

A context-based analysis may consist in a lot of different signals describing the context where the document is or is used. For example, the following signals can be analyzed: identity of the user, machine type, software version, OS version, IP address, country of connection, machine-learning based signals like for example behavioral biometry, trusted device (ex: device owned and managed by a company), time of connection, typical use of the document (ex: access once every two days), etc.

In another embodiment, the first attribute is determined based on a context of the first component with respect to the first digital document. For instance, if the analysis of the first document shows that the document is addressed to Mr. Jean Revencor, the owner of the postal address can be inferred from the context. Thus the attribute "Jean Revencor is the owner" can be attached to the found component "passport number".

In such a case, both the attribute value and the component value are found into the parsed document. It is to be noted that these two pieces of information may be considered as either component or attribute.

Preferably, the found data which can be attached to several other data is considered as an attribute while a data that can be assumed to be not shared will be treated as a component. For instance a passport number will preferably be treated as a component while a company name will preferably be treated as an attribute.

Note that a company name could also be considered as a sensitive information and managed as a component. So some data will preferably be treated as attribute, some as sensitive data (i.e. component) and some as both.

Preferably, a predefined list of component types may be provided to the system that analyzes the digital documents. For instance, the predefined list may include the following types: phone number, postal address, email address, credit card reference, passport number, bank account number, password and social security number.

In one embodiment, a preset list of attribute types may be provided to the system that analyzes the digital documents. For instance, the preset list may include the following types: relationship, owner, company, country, city, and date.

At step S14, the first attribute (if found) is allocated to the first component and an entry comprising the value of the first component and the attribute is stored in a dedicated storage unit. If the entry was already present in storage unit, the entry is updated with the found attribute.

Several attributes may be found and allocated to a component.

At step S16, a second digital document (for instance a record of a chat service) is parsed to find component(s). Parsing operation can be performed automatically by the system or manually. A second component (for instance a social security number) is identified.

At step S18, a new attribute is determined based on the context of the found second component. This operation is carried out similarly to the step S12.

At step S20, the new attribute (if found) is allocated to the second component and an entry comprising the value of the second component and the new attribute is stored in the storage unit. This operation is carried out similarly to the step S14.

At step S22, a correlation search is conducted between the first and second components using the attributes stored in the storage unit. For instance, the correlation search may be performed by searching all components attached to a target company (for instance ABCXYZ Inc). Thus, the correlation search can be run by searching all components linked to an attribute whose type is 'company' and whose value is 'ABCXYZ Inc'. Thus the correlation can be the fact that several components are linked to attributes having identical values.

Obviously, the correlation search may be done on all entries recorded in the storage unit.

It is to be noted that the correlation search does not specifically target first and second components.

At step S24, if a correlation has been found, a data reflecting the correlation between first and second components is generated and provided to an entity which is interested in this information.

The sequences including steps S10-S14 and S16-S20 are similar and may be performed a lot of times and on any kind of digital document.

Based on the registered attributes, complex correlations can be found like relationships between individuals, group memberships, detailed identity enrichment or data origin (e.g. country, company, individual.)

The correlation search may be carried out using both components values and attributes values. In particular, the correlation search may be conducted by comparing value of components with value of attributes.

It is to be noted that the second digital document may be the first digital document. Several components may be found in a single digital document.

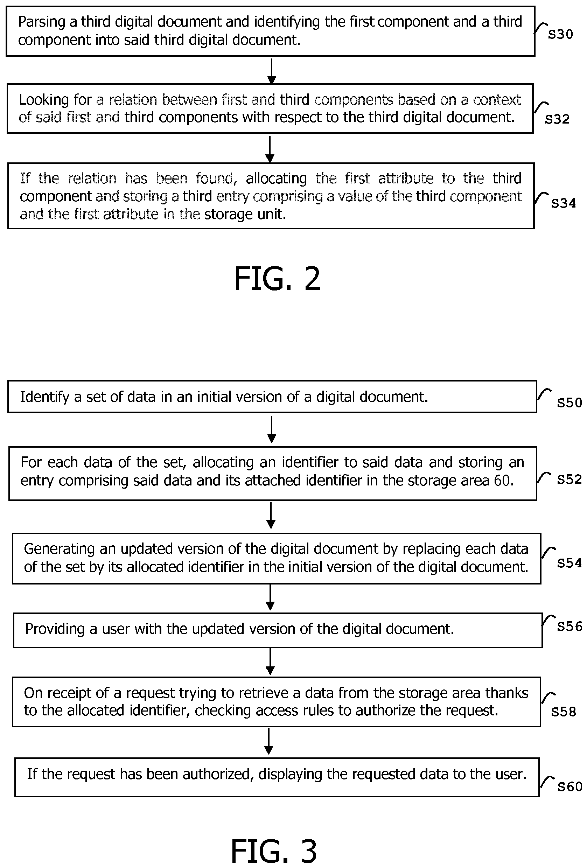

**Figure 2** shows a flow chart for handling data of documents according to a second example of the invention.

By reference to the flow chart of Figure 1, the steps S10 to S14 are assumed to be already performed.

At step S30, a third digital document (for instance a MS-Word® document) is automatically parsed to find component(s). The first component (for instance a passport number) found at step S10 and a third component (for instance a credit card number) are identified in the third digital document.

At step S32, a relation search is conducted between the first and third components based on the context of first and third components with respect to the digital document. For instance, the found relation can be 'two items belonging to the same owner'.

At step S34, if the relation has been found, the attribute ("Jean Revencor is the owner") already allocated to the first component is now also allocated to the third component and a new entry comprising the value of the third component and this attribute is stored in the storage unit.

**Figure 3** shows a flow chart for updating data of a digital document and populating the storage unit according to an example of the invention.

At step S50, an initial version of a digital document is parsed to identify a set of component(s). This step can be performed manually or automated using mechanism automated Data Discovery and Classification Process which is known per se.

At step S52, for each found component, an identifier is allocated to the found component and an entry comprising the value of the component and the allocated identifier is stored in the storage unit 60. The identifier can be generated on-the-fly or retrieved from a preset list of pattern stored in the storage unit or in another device. This process is performed for each component in the initial version of the document. Preferably, the identifier includes a display value and a link value. In one embodiment, the link value is the display value. In another embodiment, the display value is different from the link value. The Link value can be implemented a Uniform Resource Identifier (URI) or Uniform Resource Locator (URL).

At step 54, an updated version of the digital document is generated by replacing each found component by its allocated identifier in the initial version of the digital document.

The storage unit can be populated with data coming from several digital documents. Several digital documents can be updated according to the above-presented sequence.

Steps 50, 52 and 54 may be combined in a single step or two steps.

At step 56, a user is provided with the updated version of the digital document. The new document (updated version) can be sent or made available via a repository for example.

At step 58, the user wants to read the digital document and opens the updated version through a first application dedicated to word processing for instance. All replaced components do not appear in the first application. To get a replaced component, the user triggers its link value by clicking on the associated display value. The user then provides his/her credentials (and possibly additional information) to the storage unit. On receipt of the request initiated by the user, the storage unit checks its own access rules to authorize or deny the user's request.

At step 60, assuming that the request has been authorized, the value of the component (corresponding to the identifier whose link has been triggered) is provided (e.g. displayed) to the user.

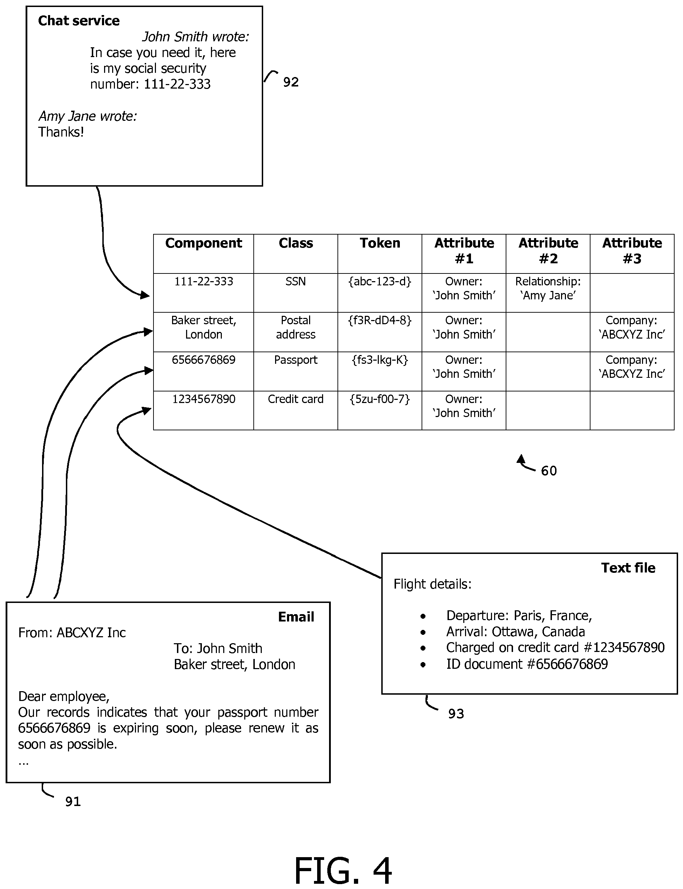

**Figure 4** shows a storage unit populated with data coming from several digital documents according to an example of the invention.

In this example, three digital documents 91-93 are used to populate the storage unit 60.

The digital document 91 is found on a laptop which is a letter sent to an employee. This letter starts with "From ABCXYZ Inc ... To: John Smith... Dear employee..." and contains a postal address and a passport number just close to the name.

A process of data classification reports the postal address and passport number as personal information. Thus two components are detected in the digital document 91.

The context-based analysis extracts several relevant information:

### a) "From: ABCXYZ Inc, To: John Smith ... Dear employee".

Consequently, an attribute indicating that John Smith is an employee of ABCXYZ Inc is automatically created and allocated in an entry stored in the storage unit 60.

In one embodiment, this attribute (Column Attribute #3) is allocated to the component "Baker street, London" having a postal address class. Such an attribute means that "ABCXYZ Inc" is the company of the owner of the postal address "Baker street, London".

In one embodiment, the attribute (Column Attribute #3) is allocated to the attribute "John Smith" having an owner class. Such an attribute means that "ABCXYZ Inc" is the company of the "John Smith".

Then an entry comprising both the postal address (i.e. component) and the attributes (owner= John Smith and company= ABCXYZ Inc) is recorded in the storage unit 60.

### b) "your passport... 6566676869"

Consequently, the passport number can be tagged with an ownership attribute set to "John Smith". In other words, an attribute indicating that John Smith is the owner of the passport having the found passport number is automatically created and allocated to the passport number. Then an entry comprising both the passport number (i.e. component) and the attributes (owner and company) is recorded in the storage unit 60.

According to an embodiment of the invention, component attributes are identified by using a context-based analysis of the digital document which is performed using a semantic analysis where the context of each component (usually made of letter(s) and/or number(s)) is taken into account to establish links between words and thus the component role and meaning. In particular the context of a component may be related to its semantic environment and to the internal structure of the document (i.e. to the location of a component into the digital document). In addition, a lexical (or grammatical) analysis can be used. By understanding the context of a component, an attribute can be identified and allocated to the component.

The context-based analysis can be performed using several technologies like machine learning.

Later on, a message posted on a chat service is detected and analyzed. The digital document 92 is made of text recorded from the chat service.

John Smith gave some personal information (ex: "In case you need it, here is my social security number: 111-22-3333").

A data discovery and classification detects the social security number (SSN) has being a personal information.

In addition, the context analysis extracts several relevant attributes like:
- the message sender: "John Smith"
- "my" keyword before the SSN indicates that this is the SSN of John Smith

The message was sent to "Amy Jane" so a relationship can be created between John Smith and Amy Jane.

Consequently, an attribute indicating that John Smith is the owner of the SSN and another attribute indicating that Amy Jane is a relationship of John Smith are automatically created, allocated to the SSN and recorded in the storage unit 60.

Then an entry comprising both the SSN (i.e. component) and the two generated attributes is recorded in the storage unit 60.

Another text file (digital document 93) is analyzed. This text file 93 contains an Identity (ID) number and a credit card number which are both detected as PII. As the Identity (ID) number is already registered (i.e. same value) as a passport number in the storage unit 60 and associated to an identity (John Smith) via an attribute, it is possible to automatically make a correlation between the found credit card number and this identity.

Consequently, an attribute indicating that John Smith is the owner of the credit card number is automatically created and allocated to the credit card number. Then an entry comprising both the credit card number (i.e. component) and the attribute is recorded in the storage unit 60.

In the example of Figure 4, each entry recorded in the storage unit 60 includes a token (also named link value of identifier) which has been generated as explained in the flow chart of Figure 3. Note that entries may also be devoid of token.

In an embodiment, the three parsed digital documents 91-93 are updated by replacing the value of the found components by their associated token. In this case, the value of the components are stored in the storage unit 60 only. (i.e. no more stored in the digital documents.) Such an embodiment is well-suited for protecting components which have sensitive values.

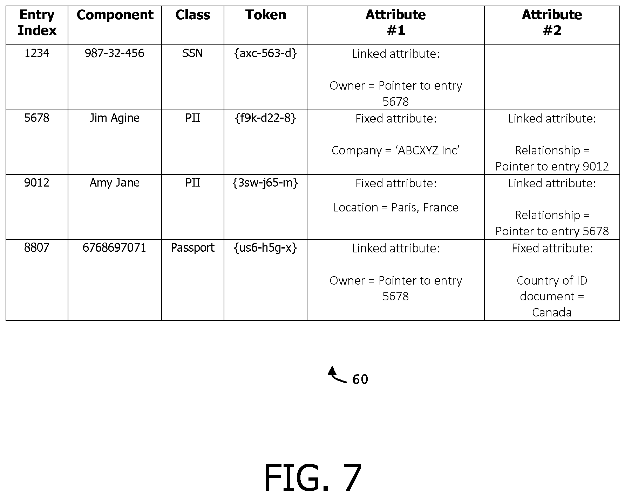

**Figure 7** shows a storage unit according to an example the invention.

In this example, the storage unit 60 has been populated with components and attributes coming from several digital documents.

In one embodiment, an attribute can be a reference to another component. Thus the storage unit can comprise two types of attributes: "fixed attributes" which are associated and specific to one component and "linked attributes" which point to a component belonging to another entry of the storage unit

Each entry stored in the storage unit 60 may have the following structure: an Entry Index, the component value, the component Class, a Token and one or several attributes. The Entry Index has a unique value allowing to identify the entry among the others. The component value is the value of a component found in a parsed digital document and the component Class is the category (or type) of the component. The Token is the display value of an identifier allocated to the component. The attributes are identified using a context analysis then allocated to components. Each attribute may be either a linked attribute or a fixed attribute.

In the example of Figure 7, a first entry referenced "1234" (i.e. index) comprises a SSN to which a linked attribute is allocated. This attribute is the owner of the SSN and corresponds to the component of the entry referenced "5678". In other words, the owner of the SNN=987-32-456 is "Jim Agine".

A second entry referenced "5678" comprises a PII to which two attributes are allocated: a fixed attribute (company) and a linked attribute (relationship) pointing at entry having the index "9012". Thus "Amy Jane" is a relationship of "Jim Agine".

A third entry referenced "9012" comprises a PII to which two attributes are allocated: a fixed attribute (location) and a linked attribute (relationship) pointing at entry having the index "5678". Thus "Jim Agine" is a relationship of "Amy Jane".

A Fourth entry referenced "8807" comprises a Passport to which two attributes are allocated: a fixed attribute (Passport issuing country) and a linked attribute (owner) pointing at entry having the index "5678". Thus "Jim Agine" is the owner of the passport having the number "6768697071".

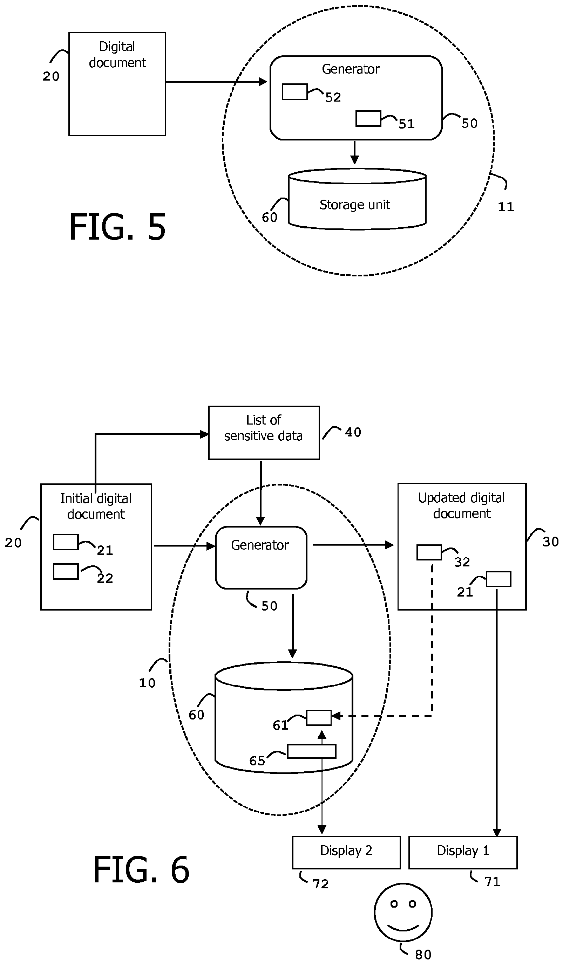

**Figure 5** shows a first example of architecture of a system according to the invention.

In this example, the system 11 is deployed in cloud environment.

The system 11 comprises a generator 50 and a storage unit 60. Preferably the storage unit 60 is secured so that only external entities owning the relevant credentials can access (read or write) data recorded in the storage unit.

The generator 50 comprises a hardware processor 51 and instructions 52 intended to be executed by the processor for providing features of the generator.

A first set of said instructions, allows the generator to parse digital documents, to identify components into the digital documents, to get the context of these documents/components, to determine attributes based on a context of each digital document or on a context of the component with respect to the digital document containing the component, to allocate each found attribute to its corresponding component and to store an entry comprising a value of the found component and the corresponding attribute in the storage unit 60.

As shown at Figure 5, the generator 50 can analyze a digital document 20 to populate the storage unit 60.

The first set of instructions allows the generator to conduct a correlation search between components using the attributes stored in the storage unit 60. Usually the generator looks for all components associated to one or several target attributes. For instance, the generator can search for components belonging to the same owner. The first set of instructions allows the generator to generate a data reflecting the correlation if the correlation has been found (Correlation between components which have the same attribute or the same set of attributes). For instance, the generator can build a list of all registered components belonging to a target owner or provide a binary answer: found or not.

A second set of said instructions, allows the generator to parse a digital document, to identify both a component into this digital document and a component already found in another digital document. The second set allows the generator to look for a relation between the two components based on a context of these components with respect to the parsed digital document. If the relation has been found, the generator is adapted to retrieve (from the storage unit) an attribute previously allocated to the component already found in another digital document and to allocate this attribute to the newly found component. The generator is configured to store an entry comprising a value of the newly found component and its allocated attribute in the storage unit 60.

A third set of said instructions allows the generator to parse another digital document, to get a new value of a component already recorded in an entry of the storage unit and to check that the new value is equal to the recorded value for the component stored in the entry. In case of discrepancy, the generator is configured to propose to an administrator (i.e. individual or machine) to update said the entry with the new component value.

Alternatively, in case of discrepancy, the generator can be configured (thanks to a fourth set of instructions) to automatically update the entry with the new component value.

Thanks to the invention, a new found component value can be propagated in a plurality of digital documents. For instance a new telephone number may be deployed in a large number of digital documents having different types.

**Figure 6** shows a second example of architecture of a system according to the invention.

In this example, the system 10 is deployed in cloud environment.

The system 10 comprises a storage unit 60 and a generator 50 providing features similar to those described at Figure 5.

Assuming that an initial version 20 of a digital document contains both non sensitive data and sensitive data, the (automated) system 10 can be designed to take as input data both the initial version 20 of the document and a list 40 of sensitive data contained in the initial version 20 of the document. The list 40 may be built by a so-called automated Data Discovery and Classification Process.

For example sensitive data may be financial reports, medical information, personally identifiable information (PII) or confidential data. It is to be noted that sensitive data are not always user related but could be also sensitive technical data like an IP address or credentials.

Alternatively, the system 10 can be adapted to automatically identify the sensitive data contained in the initial version 20 of the document.

The generator 50 includes a hardware processor and instructions that, when executed by the processor, causes said generator, for each sensitive data, to allocate an identifier to said data and to store an entry comprising said sensitive data (i.e. its value) in the storage unit 60. Preferably, each identifier comprises a display value and a link value. The value of sensitive data allocated to an identifier is reachable in the secure storage unit through the link value of the identifier. For example, the identifier 32 can be a Uniform Resource Locator (URL) made of a text display value and an address as link value.

For instance, the identifier can be set with the following content:
AZERQWER58:https://xyz.com/app/2fdkop6
where the display value is set to "AZERQWER58" and the link value is set to "https://xyz.com/app/2fdkop6".

Alternatively, the display value can be a non-textual information like an icon or a button.

In one embodiment, the display value can be the link value.

More generally the identifier can be a Uniform Resource Identifier (URI) or an identifier value which is only unique within some environment derived from the enclosing document.

An example of identifier might be a numeric identifier, having a format similar to a credit card number, residing in a document stored in a cloud storage service and given a unique identifier in that storage service. The full URI for that protected data would be the identifier value as well as the unique ID of the document.

The instructions of the generator, when executed by the processor, cause the generator 50 to generate an updated version 30 of the digital document by replacing each sensitive data by its allocated identifier in the initial version of the digital document.

Once the updated version of the digital document has been generated, the sensitive data of the second type do not appear as such in the updated version any more. They have been moved to the storage unit 60.

In order to simplify the presentation, only one identifier 32 is represented at Figure 6. The document may comprise several sensitive data.

Preferably, the display value is visible to a user reading the updated version 30 of the document while the link value is not visible although present.

Alternatively, the link value can also be visible to a user reading the updated version of the document.

The storage unit 60 can include a database (or a file system), a set of access rules and a controller engine 65 able to check whether a request trying to access a record stored in the storage unit complies with the access rules. The controller engine can be able to authorize or deny the request according to predefined access rules. The controller engine may check user's credentials like a passphrase, a biometric data, a One-Time password or a cryptographic value computed from a secret key allocated to the user for example.

Each entry stored in the storage unit 60 can comprise several fields. For example, an entry may have the following structure: an Index, the component value, the component Class, a URI, a Token, Metadata and one or several attributes:
where Index has a unique value allowing to identify the entry among the others,
where the component value is the value of a component (e.g. sensitive data) found in (and possibly removed from) a digital document,
where the component Class is the category (or type) of the component,
where URI is the link value (of the identifier allocated to the component),
where Token - also named Short Code - is the display value of the identifier allocated to the component,
where Metadata may contain various data like the entry creation/update date, author, country origin, and file name of the updated version of the document, and
where the attributes are identified and allocated as described at Figure 1. Each attribute may have a type (or category) like fixed or linked.

It is to be noted that the system can create each entry with empty attributes during a first phase and populate the attributes in a further phase. In such a case, an entry is updated each time an associated attribute is identified.

Alternatively, the system can be configured to create entries with all data - including the component value and the attributes - in a single phase. In such a case, entries are created with the associated attribute (s) .

In one embodiment, the access rules can be defined according to the profile of the users. For instance, a user accredited at level 2 is authorized to access all types of data while a user accredited at level 1 can only access non sensitive data from the updated digital document.

In another embodiment, the access rules can be defined according to both the profile of the user and the class of data. For instance, a financial data can be accessed only by Finance employees.

In another embodiment, the access rules can be defined so as to take into account the type of user's device (e.g. a Personal computer may be assumed to be more secure than a smart phone).

In another embodiment, the access rules can be defined to take into account the user's location. Thus access to a target data type can be restricted to users located in the company office only for instance.

The user can be an individual or a machine. For example, access to the data can be done by a computer machine through APIs to exploit these data. For instance, access to storage unit 60 can be automated by a computer to update security dashboards or to wipe all data related to one user if the user is removed from a corporate directory.

In another embodiment, the access rules can define access rights which are set with an expiration date.

The system can be configured to log any attempt to access sensitive data from the updated version of the digital document. Hence repeated unauthorized attempts may be detected and trigger appropriate security measures. Such log may also be used to monitor and size the system.

Once the updated version 30 of the digital document has been generated, it can be made available to a user 80.

Then the user 80 can start reading the updated version 30 of the document.

For instance, the non-sensitive data 21 can be freely displayed to the user through a first software application 71 (like MS-Word®) while the sensitive data 22 are displayed to the user through a second software application 72 (like Web-browser) only if the user has properly authenticated to the storage unit 60.

To get a sensitive data, the user triggers its corresponding link value by clicking on the associated display value. The user then provides his/her credentials (and possibly additional information) to the storage unit. On receipt of the request initiated by the user, the storage unit checks its own access rules to authorize or deny the user's request.

Optionally, the first software application may be the second software application so that the user can read the whole document through a single application.

It must be understood, within the scope of the invention, that the above-described embodiments are provided as non-limitative examples. In particular, the features described in the presented embodiments and examples may be combined.

Advantageously, the context-based analysis can be executed continuously to identify attributes in digital documents newly registered in the system or even in previously registered digital documents that have been modified.

The storage unit can store data related to several updated versions of a plurality of documents.

The architectures of the systems shown at Figures 5 and 6 are provided as examples only. These architectures may be different. For example, the storage unit can include several repositories.

Although described in the framework of cloud environment, the invention also applies to any type of framework like a local machine.

The invention allows to find correlations between data which have been discovered in different digital documents, in different locations and at different times.

The found correlations can be used to enable a lot of use cases such as Fraud prevention by detecting an individual attached to multiple SSN or Marketing campaign queries targeting specific user profiles.

The European General Data Protection Regulation (GDPR) defines a "right to be forgotten". Thanks to the invention, all sensitive data belonging to one specific individual can be easily detected in a large number of digital documents. Moreover, when component values have been moved from digital documents to the storage unit, it is possible to erase all data from one specific person by erasing target component values recorded in the storage unit only.

The invention allows to analyze the content of the storage unit, based on attribute filtering to get high-value information. For instance, it allows to extract all PII of employees belonging to a specific team or to get email addresses of all end-users which age is between 20 and 30.

## Claims

1. A computer-implemented method for managing data, wherein said method comprises parsing a first digital document (91) and identifying a first component into said first digital document, determining a first attribute based on a context of the first digital document or of the first component with respect to the first digital document, allocating the first attribute to the first component and storing a first entry comprising a value of the first component and the first attribute in a storage unit (60),
parsing a second digital document (92), identifying a second component in a second digital document, determining a second attribute based on a context of the second digital document or of the second component with respect to the second digital document, allocating the second attribute to the second component and storing a second entry comprising a value of the second component and the second attribute in the storage unit,
conducting a correlation search between said first and second components using said first and second attributes, if the correlation has been found, generating a data reflecting the correlation.

2. The method according to claim 1, wherein said method comprises parsing a third digital document (93), identifying both the first component and a third component into said third digital document, looking for a relation between said first and third components based on a context of said first and third components with respect to the third digital document, if the relation has been found, allocating the first attribute to the third component and storing a third entry comprising a value of the third component and the first attribute in the storage unit.

3. The method according to claim 1, wherein the correlation is the fact that said first and second components are linked to attributes with identical values.

4. The method according to claim 1, wherein each of said attributes is a linked attribute or a fixed attribute.

5. The method according to claim 1, wherein the correlation search is conducted by comparing the value of said first component with said second attributes.

6. The method according to claim 1, wherein said method comprises parsing a fourth digital document, getting a new value of the first component from said fourth digital document and, checking that the new value is equal to the value of the first component stored in said first entry, in case of discrepancy, proposing to an administrator to update said first entry with the new value.

7. The method according to claim 1, wherein said method comprises parsing a fourth digital document, getting a new value of the first component from said fourth digital document and, checking that the new value is equal to the value of the first component stored in said first entry, in case of discrepancy, automatically updating said first entry with the new value.

8. The method according to claim 1, wherein the method comprises:
- allocating a first identifier including a first display value and a first link value to said first component, said first identifier being stored in said first entry,
- generating a new version of the first digital document by replacing the value of said first component by the first identifier in the first digital document.

9. The method according to claim 7, wherein said first component is a sensitive data.

10. A system (10) for managing data, the system comprising a processor,
wherein the system comprises a storage unit and a generator (50) including a first set of instructions that, when executed by the processor, cause said generator to parse a first digital document (91), to identify a first component into said first digital document, to determine a first attribute based on a context of the first digital document or of the first component with respect to the first digital document, to allocate the first attribute to the first component and to store a first entry comprising a value of the first component and the first attribute in a storage unit (60), to parse a second digital document (92), to identify a second component in said second digital document, to determine a second attribute based on a context of the second digital document or of the second component with respect to the second digital document, to allocate the second attribute to the second component and to store a second entry comprising a value of the second component and the second attribute in a storage unit, to conduct a correlation search between said first and second components using said first and second attributes and if the correlation has been found, to generate a data reflecting the correlation.

11. The system according to claim 10, wherein the generator includes a second set of instructions that, when executed by the processor, cause said generator to parse a third digital document (93), to identify both the first component and a third component into said third digital document, to look for a relation between said first and third components based on a context of said first and third components with respect to the third digital document, if the relation has been found, to allocate the first attribute to the third component and to store a third entry comprising a value of the third component and the first attribute in the storage unit.

12. The system according to claim 10, wherein the generator includes a third set of instructions that, when executed by the processor, cause said generator to parse a fourth digital document, to get a new value of the first component from said fourth digital document and, to check that the new value is equal to the value of the first component stored in said first entry, in case of discrepancy, to propose to an administrator to update said first entry with the new value.

13. The system according to claim 10, wherein the generator includes a fourth set of instructions that, when executed by the processor, cause said generator to parse a fourth digital document, to get a new value of the first component from said fourth digital document and, to check that the new value is equal to the value of the first component stored in said first entry, in case of discrepancy, to automatically update said first entry with the new value.

14. The system according to claim 10, wherein the generator includes a fifth set of instructions that, when executed by the processor, cause said generator
- to allocate a first identifier including a first display value and a first link value to said first component, said first identifier being stored in said first entry,
- to generate a new version of the first digital document by replacing the value of said first component by said first identifier in the first digital document.

15. The system according to claim 14, wherein the value of said first component is reachable in the storage unit through said first link value, wherein the storage unit is configured to use access rules for authorizing or denying a request initiated by a user and aiming at accessing the value of said first component stored in said first entry.
